# EUROPEAN PATENT APPLICATION

(11) **EP 2 623 357 A1**
(43) Date of publication of application: **07.08.2013**
(21) Application number: 11828704.4
(22) Date of filing: 02.09.2011
(51) Int. Cl.: B60K 17/24, B60K 17/22

(54) **WHEEL TYPE TRAVELING BODY FOR CONSTRUCTION VEHICLE**

(30) Priority: 28.09.2010 JP 2010217493
(71) Applicant: Hitachi Construction Machinery Co., Ltd., Bunkyo-ku Tokyo 112-8563 (JP)
(72) Inventor: NAKATA Akira, Tsuchiura-shi Ibaraki 300-0013 (JP); TSUKUI Hiroshi, Tsuchiura-shi Ibaraki 300-0013 (JP); OOTA Makoto, Tsuchiura-shi Ibaraki 300-0013 (JP); TODOKORO Yuichi, Tsuchiura-shi Ibaraki 300-0013 (JP)
(74) Representative: Beetz & Partner
(86) International application number: PCT/JP2011/070057
(87) International publication number: WO 2012/043143

(57) **Abstract**

[Problem] To provide a wheel type traveling body for a construction vehicle, the wheel type traveling body being configured so that a bearing attached to a vehicle body and supporting an intermediate part of a propeller shaft can be protected. [Solution] A wheel type traveling body 10 includes : a drive device 16 provided on a frame 11 for forming a chassis of the wheel type traveling body 10; a pair of left and right front wheels 12 and a pair of left and right rear wheels 13 which are provided on a front axle 14 and a rear axle 15 which are provided at the front and rear of the frame 11; a propeller shaft 20 provided between the front axle 14 and the rear axle 15 and transmitting the travel drive force of the drive device 16 to the front axle 14 and the rear axle 15; and a bearing 30 provided on the frame 11 and rotatably supporting an intermediate part of the propeller shaft 20. The wheel type traveling body 10 also includes a protection member 50 provided so as to be separated from the bearing 30 in the radial direction of the propeller shaft 20 and so as to cover the outer periphery of the bearing 30 from below.

## Description

### TECHNICAL FIELD

The present invention relates to a wheel type traveling body for a construction vehicle provided with a bearing which supports an intermediate part of a propeller shaft rotatably.

### BACKGROUND ART

In the background art, there are some vehicles each of which is configured so that a bearing is attached to a vehicle body so as to rotatably support an intermediate part of a propeller shaft (see Patent Literature 1 and Patent Literature 2).

### CITATION LIST

### PATENT LITERATURE

Patent Literature 1: JP-A-5-178106
Patent Literature 2: JP-A-8-197970

### SUMMARY OF INVENTION

### TECHNICAL PROBLEM

A construction vehicle such as a wheel type hydraulic excavator may travel on a rough road with markedly uneven ground. On such a rough road, obstacles such as rocks or sediments may collide with a bearing provided on a lower surface side of a traveling body so that there is a fear that the bearing may be damaged due to an impact at that time so as to hinder the traveling of the construction vehicle. In a support structure of a bearing of a truck or a car according to Patent Literature 1 or Patent Literature 2, the outer periphery of the bearing is covered with a mounting bracket for mounting the bearing on a chassis frame. However, due to the structure in which the bearing and the mounting bracket are provided integrally in contact with each other, the impact of an obstacle colliding with the mounting bracket is transmitted to the bearing. It is therefore difficult to prevent the bearing from being damaged.

The present invention has been accomplished in consideration of the aforementioned circumstances. An object of the invention is to provide a wheel type traveling body for a construction vehicle capable of protecting a bearing rotatably supporting an intermediate part of a propeller shaft.

### SOLUTION TO PROBLEM

In order to achieve the foregoing object, a wheel type traveling body for a construction vehicle according to the present invention is configured as follows.

[1] A wheel type traveling body for a construction vehicle according to the present invention includes: a frame which forms a chassis of the wheel type traveling body; a drive device which is provided on the frame so as to generate a travel drive force; a front axle and a rear axle which are provided at the front and rear of the frame; a pair of left and right front wheels and a pair of left and right rear wheels which are provided on the front axle and the rear axle; a propeller shaft which is provided between the front axle and the rear axle so that the travel drive force generated by the drive device can be transmitted to the front axle and the rear axle; and a bearing which is provided on the frame so as to rotatably support an intermediate part of the propeller shaft; characterized in that: the wheel type traveling body further includes a protection member provided so as to be separated from the bearing in a radial direction of the propeller shaft and so as to cover an outer periphery of the bearing from below.

In the wheel type traveling body for a construction vehicle according to the "[1]", the protection member is provided so as to be separated from the bearing in the radial direction of the propeller shaft and so as to cover the outer periphery of the bearing frombelow. In this manner, when the construction vehicle is travelling on a rough road with markedly uneven ground, the protection member can prevent obstacles such as rocks or sediments from colliding with the bearing from below, so that the bearing can be protected.

[2] The wheel type traveling body for a construction vehicle according to the present invention is a wheel type traveling body for a construction vehicle according to the "[1]", characterized in that: the wheel type traveling body further includes a spacer member which is provided to protrude downward from the frame; the spacer member has a pair of foot parts which are located to face each other in a left/right direction of the wheel type traveling body and fixed to the frame, and a base part which is laid between the pair of foot parts; and the bearing and the protection member are attached to the base part.

In the wheel type traveling body for a construction vehicle according to the "[2]", the propeller shaft can be kept straight by means of the spacer member.

[3] The wheel type traveling body for a construction vehicle according to the present invention is a wheel type traveling body for a construction vehicle according to the "[1]" or "[2]", characterized in that: the propeller shaft has a front shaft which is transmissively linked with the front axle linked with the front wheels, a rear shaft which is transmissively linked with the rear axle linked with the rear wheels, and a universal joint which links the front shaft and the rear shaft with each other; the universal joint is located adjacently to the bearing in the front/rear direction; and the protection member has a joint protection part which is located to be separated from the universal joint in the radial direction of the propeller shaft and which is located to cover the universal joint from below.

In the wheel type traveling body for a construction vehicle according to the "[3]", the universal joint can be protected by the joint protection part of the protection member in the same manner as the bearing.

### ADVANTAGEOUS EFFECTS OF INVENTION

According to the present invention, as described above, when the construction vehicle is travelling on a rough road with markedly uneven ground, the protection member can prevent obstacles such as rocks or sediments from colliding with the bearing from below, so that the bearing can be protected. It is therefore possible to suppress the occurrence frequency with which the bearing is damaged during the traveling of the construction vehicle.

### BRIEF DESCRIPTION OF DRAWINGS

[Fig. 1] A left side view of a hydraulic excavator provided with a wheel type traveling body according to an embodiment of the present invention.
[Fig. 2] An enlarged side view of a propeller shaft shown in Fig. 1 and its surroundings.
[Fig. 3] An enlarged view of a portion III shown in Fig. 3.
[Fig. 4] A sectional view of a protection member taken on line IV-IV of Fig. 3.
[Fig. 5] A sectional view taken on line V-V of Fig. 3.
[Fig. 6] Aview showing another example of the protection member.

### DESCRIPTION OF EMBODIMENTS

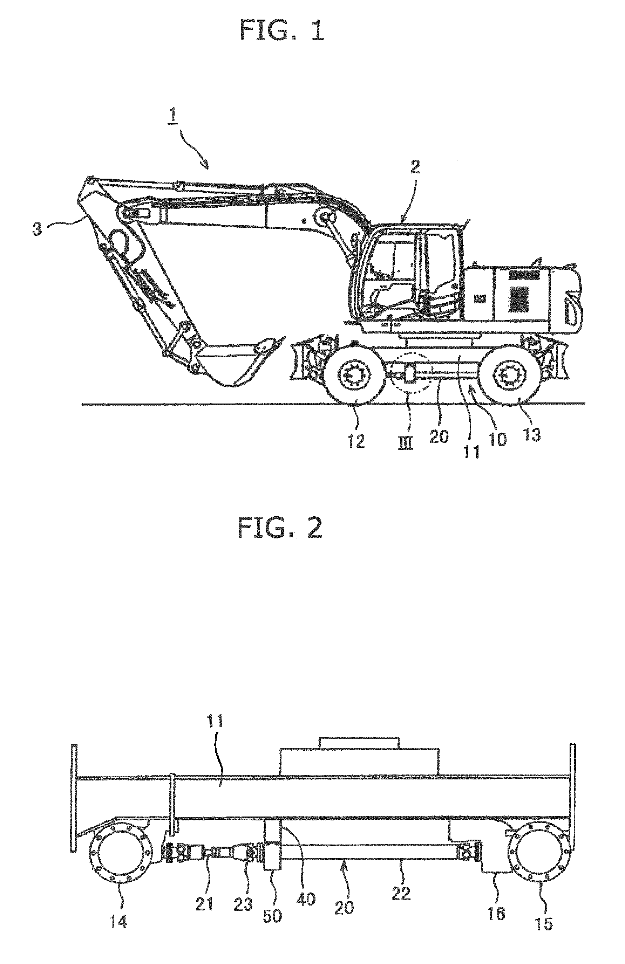

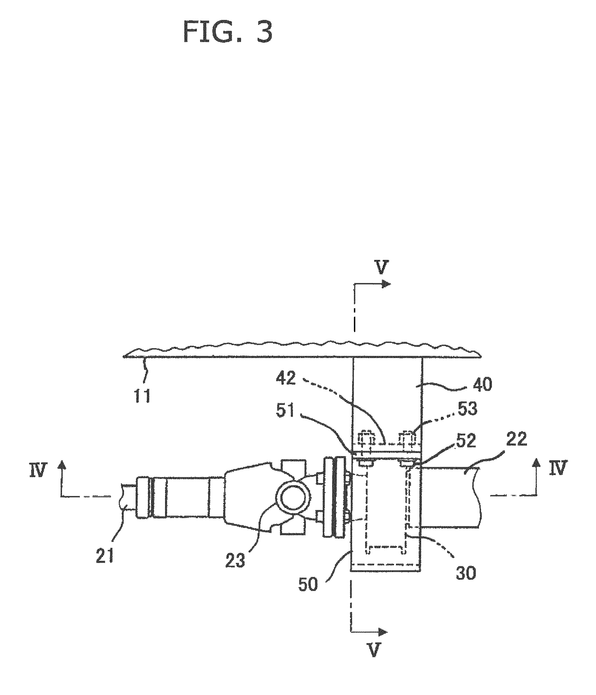

An embodiment of the present invention will be described with reference to Figs. 1 to 5.

A hydraulic excavator 1 shown in Fig. 1 has a wheel type traveling body 10, a slewing structure 2 which is slewably linked with the wheel type traveling body 10, and a front work device 3 which is provided on the slewing structure 2.

The wheel type traveling body 10 has a frame 11 which forms a chassis of the wheel type traveling body and extends in the front/rear direction of the wheel type traveling body, a drive device 16 which is provided on the frame 11 so as to generate a travel drive force by means of a drive motor and a transmission, a front axle 14 and a rear axle 15 which are provided at the front and rear of the frame 11, a pair of left and right front wheels 12 and a pair of left and right rear wheels 13 which are provided on the front axle 14 and the rear axle 15, a propeller shaft 20 which is provided between the front axle 14 and the rear axle 15 so that the travel drive force generated by the drive device 16 can be transmitted to the front axle 14 and the rear axle 15, and a bearing 30 which is provided on the frame 11 so as to rotatably support an intermediate part of the propeller shaft 20.

The propeller shaft 20 has a front shaft 21 which is transmissively linked with the front axel 14 liked with the front wheels 12, a rear shaft 22 which is transmissively linked with the rear axel 15 liked with the rear wheels 13, and a universal joint 23 which links the front shaft 21 and the rear shaft 22 with each other. The joint portion between the front axle 14 and the front shaft 21 and the joint portion between the rear axle 15 and the rear shaft 22 are provided to have the same height when the hydraulic excavator 11 is located on the horizontal plane. The universal joint 23 is located adjacently to the bearing 30 in the front/rear direction. The bearing 30 is mounted on the outer peripheral surface of a front end part of the rear shaft 22.

A spacer member 40 is provided on the frame 11 so as to protrude downward therefrom. The spacer member 40 has a pair of foot parts 41 which are located to face each other in the left/right direction of the wheel type traveling body 10 and fixed to the frame 11, and a base part 42 which is laid between the pair of foot parts 41. In this embodiment, the foot parts 41 are fixed to the frame 11 by welding. However, the foot parts 41 may be fixed by another means such as bolting.

The bearing 30 is attached to the base part 42 of the spacer member 40. The distance between the frame 11 and the base part 42 is set so that the propeller shaft 20 can be formed into a straight line extending in the front/rear direction in the state where the bearing 30 is attached to the base part 42. The bearing 30 rotatably supports an intermediate part of the propeller shaft 20, for example, a substantially lengthwise central part of the long propeller shaft 20.

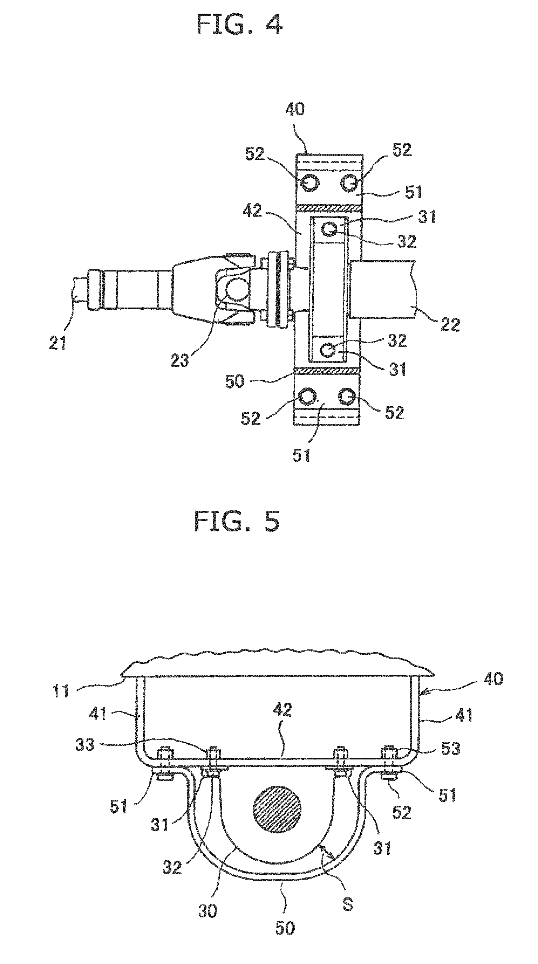

Bolting margins 31 are provided in a protrusive manner in upper ends of left and right opposite side parts of the bearing 30 respectively. These bolting margins 31 are fixed to the base part 42 of the spacer member 40 by bolting. The reference numerals 32 and 33 in Fig. 5 represent bolts and nuts for fastening the bolting margins 31 of the bearing 30 to the base part 42 of the spacer member 40 respectively.

A protection member 50 is also attached to the base part 42 of the spacer member 40. The protection member 50 is provided to be separated from the bearing 30 in the radial direction of the propeller shaft 20, that is, to be located with a space S from the bearing 30 and to cover the outer periphery of the bearing 30 from below. The protection member 50 is formed by bending a plate-like member into a semicircular shape.

Bolting margins 51 are provided in a protrusive manner in upper ends of left and right opposite side parts of the protection member 50 respectively. These bolting margins 51 are fixed to the base part 42 of the spacer member 40 by bolting. The reference numerals 52 and 53 in Fig. 5 represent bolts and nuts for fastening the bolting margins 51 of the protection member 50 to the base part 42 of the spacer member 40 respectively.

According to the wheel type traveling body 10 according to this embodiment, the following effects can be obtained.

In the wheel type traveling body 10, the protection member 50 is provided to be separated from the bearing 30 in the radial direction of the propeller shaft 20 and to cover the outer periphery of the bearing 30 from below. In this manner, when the hydraulic excavator 1 is travelling on a rough road with markedly uneven ground, the protection member 50 can prevent obstacles such as rocks or sediments from colliding with the bearing 20 from below, so that the bearing 20 can be protected. It is therefore possible to suppress the occurrence frequency with which the bearing 30 is damaged during the traveling of the hydraulic excavator 1.

In the wheel type traveling body 10, the propeller shaft 20 can be kept straight by means of the spacer member 40.

In the wheel type traveling body 10, when the bearing 30 comes off the spacer member 40 and drops therefrom, the propeller shaft 20 can be received by the protection member 50.

In the wheel type traveling body 10, when the protection member 50 is damaged, it is possible to replace the protection member 50 with a new one without removing the spacer member 40 from the frame 11.

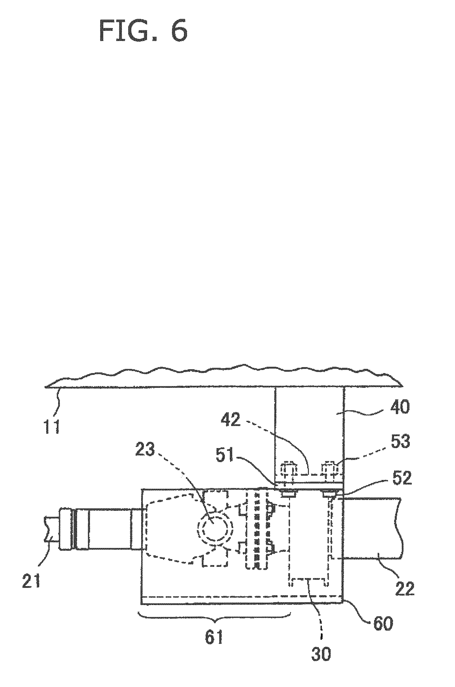

Although the protection member 50 covers only the bearing 30 from below in the aforementioned embodiment, the protection member in the present invention is not limited to the protection member 50 but may be a protection member 60 shown in Fig. 6. The protection member 60 has a joint protection part 61 which is located to be separated from the universal joint 23 in the radial direction of the propeller shaft 20 and which is located to cover the universal joint 23 from below. Of the protection member 60, the part excluding the bolting margins 51 is extended frontward to form the joint protection part 61. The universal joint 23 can be protected by the joint protection part 61 in the same manner as the bearing 30.

### REFERENCE SIGNS LIST

- 1: hydraulic excavator
- 2: slewing structure
- 3: front work device
- 10: wheel type traveling body
- 11: frame
- 12: front wheel
- 13: rear wheel
- 14: front axle
- 15: rear axle
- 16: drive device
- 20: propeller shaft
- 21: front shaft
- 22: rear shaft
- 23: universal joint
- 30: bearing
- 31: bolting margin
- 32: bolt
- 33: nut
- 40: spacer member
- 41: foot part
- 42: base part
- 50: protection member
- 51: bolting margin
- 52: bolt
- 53: nut
- S: space
- 60: protection member
- 61: joint protection part

## Claims

1. A wheel type traveling body for a construction vehicle, comprising:
a frame which forms a chassis of the wheel type traveling body;
a drive device which is provided on the frame so as to generate a travel drive force;
a front axle and a rear axle which are provided at the front and rear of the frame;
a pair of left and right front wheels and a pair of left and right rear wheels which are provided on the front axle and the rear axle;
a propeller shaft which is provided between the front axle and the rear axle so that the travel drive force generated by the drive device can be transmitted to the front axle and the rear axle; and
a bearing which is provided on the frame so as to rotatably support an intermediate part of the propeller shaft;
**characterized in that**:
the wheel type traveling body further comprises a protection member provided so as to be separated from the bearing in a radial direction of the propeller shaft and so as to cover an outer periphery of the bearing from below.

2. A wheel type traveling body for a construction vehicle according to Claim 1, **characterized in that**:
the wheel type traveling body further comprises a spacer member which is provided to protrude downward from the frame;
the spacer member has a pair of foot parts which are located to face each other in a left/right direction of the wheel type traveling body and fixed to the frame, and a base part which is laid between the pair of foot parts; and
the bearing and the protection member are attached to the base part.

3. A wheel type traveling body for a construction vehicle according to Claim 1 or 2, **characterized in that**:
the propeller shaft has a front shaft which is transmissively linked with the front axle linked with the front wheels, a rear shaft which is transmissively linked with the rear axle linked with the rear wheels, and a universal joint which links the front shaft and the rear shaft with each other;
the universal joint is located adjacently to the bearing in the front/rear direction; and
the protection member has a joint protection part which is located to be separated from the universal joint in the radial direction of the propeller shaft and which is located to cover the universal joint from below.
